# EUROPEAN PATENT SPECIFICATION

(11) **EP 1 073 330 B1**
(45) Date of publication and mention of the grant of the patent: **30.10.2002**
(21) Application number: 99916086.4
(22) Date of filing: 26.04.1999
(51) Int. Cl.: A01N 3/02, A01G 5/06

(54) **METHOD OF PRESERVING CUT FLOWERS**
VERFAHREN ZUM KONSERVIEREN VON SCHNITTBLUMEN
PROCEDE D'ENTRETIEN DE FLEURS COUPEES

(30) Priority: 24.04.1998 NL 1008986
(43) Date of publication of application: 07.02.2001
(73) Proprietor: Vonk, Hans, 2461 LC Ter Aar (NL); Star, Thomas Willem Hendericus, 2231 ZD Rijnsburg (NL)
(72) Inventor: Vonk, Hans, 2461 LC Ter Aar (NL); Star, Thomas Willem Hendericus, 2231 ZD Rijnsburg (NL)
(74) Representative: Van Breda, Jacobus
(86) International application number: NL9900239
(87) International publication number: WO99055154

(56) References cited:
- WO-A-98/16428
- GB-A- 2 215 174
- US-A- 2 971 292
- US-A- 4 225 679
- US-A- 4 906 276
- US-A- 5 580 975
- DATABASE WPI Section Ch, Week 9045 Derwent Publications Ltd., London, GB; Class A97, AN 90-340094 XP002089962 & JP 02 247101 A (GEM KK), 2 October 1990 (1990-10-02)
- DATABASE WPI Section Ch, Week 9717 Derwent Publications Ltd., London, GB; Class G04, AN 97-186861 XP002089963 & JP 09 047154 A (FUSHIMI SEISAKUSHO KK), 18 February 1997 (1997-02-18)
- DATABASE WPI Section Ch, Week 8833 Derwent Publications Ltd., London, GB; Class A86, AN 88-230437 XP002089965 & JP 63 162601 A (NIPPON SHOKUBAI KAGAKU KOGYO CO LTD), 6 July 1988 (1988-07-06)
- DATABASE WPI Section PQ, Week 9637 Derwent Publications Ltd., London, GB; Class P13, AN 96-365353 XP002111827 & JP 08 172911 A (NIPPON TURNER KK), 9 July 1996 (1996-07-09)
- DATABASE WPI Section PQ, Week 9634 Derwent Publications Ltd., London, GB; Class P27, AN 96-334334 XP002089966 & BE 1 008 661 A (SCHORPION E M P), 2 July 1996 (1996-07-02)
- DATABASE WPI Section PQ, Week 8607 Derwent Publications Ltd., London, GB; Class P27, AN 86-046737 XP002089964 & SE 8 403 211 A (NILSSON-ENGEROTH B), 15 December 1985 (1985-12-15) cited in the application

## Description

The present invention relates to a method of preserving cut flowers, wherein the cut flowers are placed with their stems into a holder, which holder is provided with a bottom and contains an aqueous gel as medium, and the gel is prepared by allowing granules of a water absorbent cross-linked polymer to swell.

It is known that to preserve cut flowers they generally have to stand substantially continuously in water. This also applies during transport, especially for the most delicate cut flowers such as lathyrus. During the transport of holders filled with water the water may splash out, or the holders may fall over so that the cut flowers stand dry. At the same time, bacteria and moulds and consequently diseases as, for example, botrytis may spread through the water. A further disadvantage is that the cut flowers have to be transported vertically, which means that more space is required. This in turn raises the transport costs. It makes transport of cut flowers over large distances very expensive.

To solve this problem the prior art proposes the use of a gel (see, for example, SE-8403211). The known gels exhibit various disadvantages. Some gels themselves serve as medium for bacteria, thereby increasing the problem of spreading of disease. The advantage of gels based on swollen granules is that if they inadvertently become distributed over plant parts, only a smaller part will become infected compared with a gel based on a dissolved polymer. From practice and from literature the use of gels based on granules with a size of 0.5 mm is already known. The interstitial spaces between the swollen granules contain liquid water. This water is still able to spread diseases, albeit to a limited degree. For this reason it is a known practice in the prior art to dissolve a polymer in said interstitial water and to make the water into gel. Such a gel is relatively complex (different gel forming components) and has been shown in practice to be difficult to handle, for example, when transferring the gel into a holder. If a gel is used that has been prepared by adding to the granules only so much water as the granules are able to absorb, a cut flower that has been inserted into the gel will be unable to take up sufficient water.

It is the aim of the present invention to eliminate the above-mentioned disadvantages to a large extent.

To this end the method according to the present invention is characterized in that the stems are inserted into a gel on polyacrylamide basis, in which the size of the dry granules is 0.2 mm or smaller.

Surprisingly it has been shown that a gel based on a polyacrylamide-comprising polymer, in which the granules in dry condition have a size of 0.2 mm or smaller, is not only easier to handle (i.e. easier to pump), but also that there is no longer any need for a polymer in solution. Moreover, it appears that sufficient water is released for the preservation of the cut flowers. Without wishing to be bound to any theory, it is believed that due to their larger surface area smaller granules are better able to release water to be taken up by the cut flowers. The gel used in the method is liquid, that is to say it is able to flow. The lower-limit size of the granules does not appear to be typical, but preferably it will in general be larger than the diameter of the capillaries of the respective cut flower. Although a soluble polymer may be used, it is not required and by refraining from doing so, a simple gel-forming composition may be provided.

Derwent Database entry XP-00208962 (JP-A- 02 247101) discloses a gel composition for preserving cut flowers comprising water-soluble polymers and cross-linked polymers. For the water-soluble polymers mention is made of polyacrylamides. For the water-absorbing polymers absorbing several tens of thousands of times of water mention is made of cross-linked polyacrylates, starch-polyacrylonitriles and isobutylene-maleic anhydrides. The composition also requires a bulk filler.

Derwent Database entry XP-00208966 (BE 1 008 661 A) relates to a holder comprising a viscous anchoring gel. No details on the size of dry granules are disclosed.

US-A-2 971 292 discloses a method for preserving cut flowers wherein the flowers are placed in a granular aqueous gel. Polyacrylamide is not disclosed.

US-A-4 906 276 discloses a method for improving crop-yield, utilizing a gel containing polyacrylamide. No reference is made to granular material.

US-A-4 559 074 describes plant growth composition comprising cross-linked polyacrylamide particles in a porous growth medium such as sand. The preferred particle size is 0.05 to 0.5 mm.

A gel suitable for application in the method according to the present invention contains sufficient gel-forming polymer to increase the viscosity of the aqueous medium such that it will not easily splash or run out of the holder. The upper limit of the concentration of gel-forming polymer in a gel according to the invention is determined by the ability of the gel to release water to the cut flower. With the method according to the present invention there is no objection to the gel exhibiting some syneresis, that is to say that it temporally loses water.

Depending on the desired flow behaviour and the storage life of the cut flowers, a person knowledgeable about gels is able in a simple manner to determine a suitable concentration of gel-forming polymer. If a higher concentration unacceptably shortens the storage life, the concentration of gel-forming polymer has to be reduced. If the aqueous medium is too thin, the concentration of gel-forming polymer has to be increased. Reference in the present application to a granule size of less than 0.2 mm is understood to mean a size distribution of granules, in which more than 80% by weight, and preferably at least 90% by weight of the granules have a size of 0.2 mm or smaller.

A typical suitable concentration of gel-forming polymer is 3 to 25 g, preferably between 5 and 20 g per litre of the final gel.

According to a more preferred embodiment, the gel comprises 6 to 14 g gel-forming polymer per litre of the final gel.

According to a favourable embodiment the aqueous gel further comprises at least one compound chosen from the group comprised of a disinfectant, a surfactant, nutrients and a colouring agent.

The first three promote the storage life of the cut flowers. A colouring agent may, for example, be used for the identification of a gel with a particular composition, for example, to indicate for which kind of cut flowers the gel is suitable.

According to a very favourable embodiment the aqueous gel comprises polyacrylamide and has a pH between 2.5 and 7, preferably between 4 and 6.5.

Such gels have been proven to be very effective for the preservation of cut flowers.

The method according to the present invention is in particular also suitable for the preservation of cut flowers during transport. The cut flowers are preferably transported in a substantially horizontal position.

As a result it has become possible to also transport cut flowers that are sensitive to dryness using up a smaller volume. This means that air transport is more often economically feasible, thereby allowing the supply to markets that could previously not be catered for because of the short life that would remain for the flowers once they have reached the consumer. For nearer markets applies that the consumer is able to enjoy the flowers longer. The term "substantially horizontally" is understood to mean an angle smaller than approximately 25°.

A gel suitable for application in the present invention may be provided with nutrients for cut flowers.

A suitable holder for working the present invention comprises a holder for the preservation of cut flowers, which holder comprises a bottom and an opening for the insertion of the stem of the cut flower and is provided with a gel suitable for application in the invention, which holder is further provided with means for keeping the end of a stem of the cut flower at a distance from the bottom.

Especially when the stem of the cut flower has been cut straight across, there is a risk when using the gel suitable for application in the present invention that due to contact with the holder the cut-off end does not make sufficient contact with the gel granules, so that the cut flower does not receive an adequate amount of water. This is particularly a problem with the gel suitable for application in the present invention because of the smaller diameter of the water-conducting channels between the swollen gel granules (capillary forces). The provision of means for distancing ensures that sufficient gel granules make contact with the cut end of the flower.

According to a preferred embodiment the holder suitable for application in the present invention is provided with sealing means chosen from the group comprising i) a cap sealing the opening by means of clamps; ii) a pierceable membrane; and iii) a removable membrane provided with means for removing the membrane by pulling it off.

Such a holder can be prefabricated and can simply be prepared for use for the preservation of a cut flower by a flower grower, florist or consumer .

The invention will be explained with reference to the following exemplary embodiments and with reference to the drawings in which
Fig. 1 represents a longitudinal section of a holder according to the invention; and
Fig. 2 represents a cross-section of the holder of Fig. 1 along line II-II.

### 1) Preparation of a gel for the preservation of cut flowers.

76 g polyacrylamide having a granule size < 0.2 mm, Stockosorb 400 F® (Chemische Fabrik Stockhausen GmbH, Krefeld, Germany) which is 0.1% cross-linked, is added to 10 l of a solution comprised of 5 g/l Flower food (Laboratorium van der Sprong B.V., Roelofarendsveen, The Netherlands) for lathyrus, or 10 g/l for carnations. Among other things, Flower food comprises a disinfectant, a surfactant, and nutrients. For the person skilled in the art it will be obvious that depending on the crop to be preserved, other compositions that are known as such, may be used. The mixture is blended until a homogenous gel is obtained. The pH of the gel is approximately 5.

### 2) The gel's suitability for lathyrus.

The suitability of the gel was tested by placing lathyrus cut flowers in the gel as prepared above. As control, an aqueous medium was used having the same composition but without the gel-forming agent.

The presence of the gel-forming agent appeared to have no adverse effect on the storage life.

### 3) The gel's suitability for carnations

The suitability of the gel used in the method of the invention was tested by placing carnations into the gel prepared as in 1). As control, an aqueous medium was used having the same composition but without the gel-forming agent. Without the gel-forming agent the storage life was 12.8 days and with the gel-forming agent 12.4 days.

### 4) The effect of gel granule size.

In the manner described for 1) for lathyrus, gels were made on the basis of
- Stockosorb 400F® (0-200 micron)
- Stockosorb 400K® (200-800 micron)
- Stockosorb 400RD® (100-800 micron)
- Stockosorb 410K® (800-3000 micron)
As control flowers from the same batch were used without being placed into a gel. All flowers were stored in a horizontal position for 48 hours at 16°C. After completion of this 'simulation of transport' all the flowers, those in gel as well as those of the control group, were wilted and discoloured. However, this did not apply to the flowers that were stored in the gel comprising Stockosorb 400F®. These were still completely turgid and had their original colour. Subsequently, the storage life of all the bunches of flowers was examined by placing the individual bunches into a vase with clean water. The storage life of the control group was shown to be the same as that of the flowers tested on gels with larger granules. The flowers that were stored on Stockosorb 400F® had a longer storage life. As additional controls use is made of gels based on Terawet™ (polyacrylate/polyacrylamide copolymers; granule size between 70 and 2000 micron; Terawet Corp., San Diego, USA) and Broadleaf™ P4 (polyacrylamide gel; precise granule size unknown but relatively large. Greenacres, Denham, UK). These also did not show the favourable results that were seen when using a gel according to the invention.

As holder, a deformable holder may be used, whose end opposite the bottom is pressed against the stems with the aid of fastening means. In this manner the gel is contained by the holder, while due to the high viscosity the gel is not, or only with difficulty able to pass through the narrow gaps between the stems. This is an effective way of achieving that the bottom ends of the stems remain in contact with an aqueous medium while the likelihood of spreading diseases is greatly reduced. Suitable fastening means are, for example, string, a rectangular strip of plastic reinforced with wire, and according to a favourable embodiment, an elastic band or tape. The holder is made of a gel- or water-impermeable material, for example a plastic such as polyethylene. The deformable holder is, for example, a plastic bag.

The holder may also be a rigid holder, such as a holder for one cut flower. These are known to the public to be used mostly for orchids, but may also be used for other cut flowers such as roses and gerberas. In order to ensure supply of water to the cut flower when the gel suitable for the method of the present invention is used, and in particular in the case of the stem being cut straight-across, the holder has to be provided with means for keeping the end of the stem off the wall and in particular off the bottom of the holder. There are various ways of achieving this. One could consider elements projecting from the wall of the holder, bending the stem in an undulatory manner. This causes the holder to be held to the stem by means of friction. The holder may also be provided with projections on which the end of the stem rests, which projections will to a large extent leave the end of the stem free.

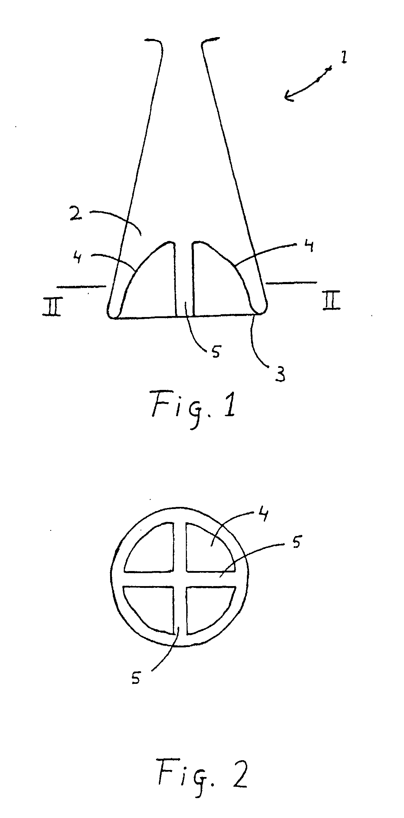

A suitable embodiment is represented in Fig. 1, showing a longitudinal section of a holder 1, with a cavity 2 for the accommodation of gel. The bottom 3 is provided with protuberances 4 leaving open a channel 5. The width of the channel 5 is greater than the size of the swollen gel granules and smaller than the diameter of the stem of the cut flower for which the holder has been designed. In this way a sufficient supply of water to the cut flower is ensured. If the stem happens to come between the wall of the holder 1 and a projection 4 the supply of water is also ensured.

Fig. 2 shows a cross-section of the holder 1 wherein the embodiment represented is provided with two channels 5 and four protuberances 4.

For use the holder is conveniently provided with a seal, such as a cap. The cap may be a cap that clamps around the open end of the holder 1, or a cap that clamps against the inside of the opening. In the latter case the cap is conveniently provided with a lip part to facilitate removal of the cap. The holder may also be sealed by means of a membrane, such as plastic foil that is glued to the end. The membrane may be provided with non-perforated grooves, which make it easier to prick a stem through the locally weakened membrane. Alternatively, the membrane may also be removed before use, in which case the membrane is suitably provided with a lip part.

## Claims

1. A method of preserving cut flowers, wherein the cut flowers are placed with their stems into a holder, which holder is provided with a bottom and contains an aqueous gel as medium, and the gel is prepared by allowing granules of a water absorbent cross-linked polymer to swell, **characterized in that** the stems are inserted into a gel on polyacrylamide basis, in which the size of the dry granules is 0.2 mm or smaller.

2. A method according to claim 1, **characterized in that** the gel comprises 5 to 20 g gel-forming polymer per litre of the final gel.

3. A method according to claim 2, **characterized in that** the gel comprises 6 to 14 g gel-forming polymer per litre of the final gel.

4. A method according to one of the preceding claims, **characterized in that** the aqueous gel further comprises at least one compound chosen from the group comprised of a disinfectant, a surfactant, nutrients and a colouring agent.

5. A method according to one of the preceding claims, **characterized in that** the aqueous gel has a pH between 4 and 6.5.

6. A method for the preservation of cut flowers transport according to one of the preceding claims, **characterized in that** the cut flowers are transported in a substantially horizontal position, i.e. at an angle of less than 25°.

7. A method according to one of the preceding claims, **characterized in that** a holder is used, which holder is further provided with means for keeping the end of the stem of a cut flower at a distance from the bottom.

## Patentansprüche

1. Verfahren zur Konservierung von Schnittblumen, bei dem Schnittblumen mit den Stengeln in einem Halter plaziert werden, der mit einem Boden versehen ist und als Medium ein wäßriges Gel enthält, wobei das Gel erhalten wird, indem man Körner eines wasserabsorbierenden quervernetzten Polymers zum Quellen bringt, **dadurch gekennzeichnet, daß** die Stengel in ein Gel auf Polyacrylamidbasis eingebracht werden, wobei die Größe der trockenen Körner 0,2 mm oder kleiner ist.

2. Verfahren nach Anspruch 1, **dadurch gekennzeichnet, daß** das Gel 5 g bis 20 g gelbildendes Polymer pro Liter des letztlich gebildeten fertigen Gels enthält.

3. Verfahren nach Anspruch 2, **dadurch gekennzeichnet, daß** das Gel 6 g bis 24 g gelbildendes Polymer pro Liter des fertigen Gels enthält.

4. Verfahren nach einem der vorangehenden Ansprüche, **dadurch gekennzeichnet, daß** das wäßrige Gel weiterhin mindestens eine Verbindung umfaßt, die aus der Gruppe ausgewählt ist, die Desinfektionsmittel, oberflächenaktive Stoffe, Nährstoffe und Farbstoffe enthält.

5. Verfahren nach einem der vorangehenden Ansprüche, **dadurch gekennzeichnet, daß** das wäßrige Gel einen pH-Wert zwischen 4 und 6,5 aufweist.

6. Verfahren zur Konservierung von Schnittblumen während des Transports nach einem der vorangehenden Ansprüche, **dadurch gekennzeichnet, daß** die Schnittblumen in einer im wesentlichen horizontalen Position, d.h. in einem Winkel von weniger als 25°, transportiert werden.

7. Verfahren nach einem der vorangehenden Ansprüche, **dadurch gekennzeichnet, daß** ein Halter verwendet wird, der weiterhin mit Mitteln versehen ist, um das Stengelende der Schnittblume in einem Abstand vom Boden zu halten.

## Revendications

1. Procédé pour conserver des fleurs coupées, dans lequel les fleurs coupées sont placées avec leur tige dans un support, ledit support étant pourvu d'un fond et contenant un gel aqueux en tant que milieu, et le gel étant préparé en permettant le gonflement de granules d'un polymère réticulé absorbant l'eau, **caractérisé en ce que** les tiges sont insérées dans un gel sur une base de polyacrylamide, dans lequel la taille des granules secs est de 0,2 mm ou inférieure.

2. Procédé suivant la revendication 1, **caractérisé en ce que** le gel comprend 5 à 20 grammes de polymère pouvant former du gel par litre du gel final.

3. Procédé suivant la revendication 2, **caractérisé en ce que** le gel comprend 6 à 14 grammes de polymère pouvant former du gel par litre du gel final.

4. Procédé suivant l'une quelconque des revendications précédentes, **caractérisé en ce que** le gel aqueux comprend en outre au moins un composé choisi dans le groupe constitué d'un désinfectant, d'un tensioactif, de substances nutritives et d'un agent colorant.

5. Procédé suivant l'une quelconque des revendications précédentes, **caractérisé en ce que** le gel aqueux présente un pH compris entre 4 et 6,5.

6. Procédé de conservation de fleurs coupés pendant le transport suivant l'une quelconque des revendications précédentes, **caractérisé en ce que** les fleurs coupées sont transportées dans une position sensiblement horizontale, c'est-à-dire à une inclinaison de moins de 25°.

7. Procédé suivant l'une quelconque des revendications précédentes, **caractérisé en ce qu'**un support est utilisé, ledit support étant en outre pourvu de moyens pour maintenir l'extrémité de la tige d'une fleur coupée à distance du fond.
